# EUROPEAN PATENT APPLICATION

(11) **EP 1 335 360 A2**
(43) Date of publication of application: **13.08.2003**
(21) Application number: 02026541.9
(22) Date of filing: 27.11.2002
(51) Int. Cl.: G11B 19/02, G11B 5/012

(54) **Recording/reproduction apparatus, information processing system including the same apparatus, and method of initializing a recording medium in the apparatus**

(30) Priority: 29.01.2002 JP 2002020626
(71) Applicant: Kabushiki Kaisha Toshiba, Tokyo (JP)
(72) Inventor: Oka, Hiroyuki, 1-chome, Minato-ku, Tokyo 105-8001 (JP)
(74) Representative: Henkel, Feiler, Hänzel

(57) **Abstract**

A recording/reproduction apparatus (1) includes a magnetic disk. An information apparatus (2) sets an instruction to initialize the magnetic disk and transmits the set instruction to the recording/reproduction apparatus (1) through a network. The recording/reproduction apparatus (1) receives the instruction from the information apparatus (2) through the network (3) and initializes the recording medium (14) in accordance with the instruction. Thus, a user can finely initializes the recording medium (14) of the recording/reproduction apparatus (1) from remote locations.

## Description

The present invention relates to a recording/reproduction apparatus having a medium, an information processing system including the same apparatus, and a method of initializing a medium in the same apparatus.

A videorecording/reproduction apparatus, which is a kind of recording/reproduction apparatus, has been widely used to record and reproduce pictures received from a TV station and the like via an antenna and a tuner. The videorecording /reproduction apparatus usually includes a recording medium such as a magnetic disk to record the received pictures as video data.

The recording medium includes, as a data recording area, an area for recording system set information (system set values) such as recording time and channel numbers for programming to record programs as well as an area for recording the above video data.

When a user who uses a videorecording/reproduction apparatus recognizes abnormality in videorecording and reproduction, he or she considers that abnormality occurs in data structure of a data recording area and feels the need to eliminate the abnormality by initializing (formatting) the data recording area. To initialize the area, the user generally depresses a button of the apparatus or operates a remote control.

The above-described videorecording/reproduction apparatus has the following drawback.

A user has to be near the apparatus because he or she has to directly depress a button or the like of the apparatus in order to initialize a data recording area.

In the videorecording/reproduction apparatus, an area to be initialized is predetermined and fixed (only the video data area is initialized in some apparatuses and all areas including a video data area and a system set information area are initialized in other apparatuses). Therefore, the apparatus also has the drawback that a user cannot make fine setting for initialization as he or she desires because the conventional initialization is performed in the same manner.

Embodiments of the present invention provide a recording/reproduction apparatus, an information processing system, and an initializing method in which a user can perform an initializing operation as he or she desires from remote locations.

According to one aspect of the present invention, there is provided a method of initializing a medium in a first apparatus, the method comprising setting an instruction to initialize the medium by a second apparatus; transmitting the instruction set by the second apparatus to the first apparatus through a network; and receiving the instruction, which are transmitted from the second apparatus through the network, by the first apparatus and initializing the medium in accordance with the instruction.

According to another aspect of the present invention, there is provided an information processing system comprising a first apparatus having a medium; and a second apparatus which sets an instruction to initialize the medium and transmits the set the instruction to the first apparatus through a network, the first apparatus receiving the instruction from the second apparatus through the network and initializing the medium in accordance with the instruction.

According to still another aspect of the present invention, there is provided a recording/reproduction apparatus comprising a medium; a communication unit which receives an instruction to initialize the medium through a network; and a processing unit which initializes the medium in accordance with the instruction received by the communication unit.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram of the entire configuration of an information processing system according to an embodiment of the present invention;
FIG. 2 is a block diagram of the structure of a data recording area on a magnetic disk of a magnetic disk drive of the system shown in FIG. 1;
FIG. 3 is a block diagram showing an example of the internal structure of a computer of the system shown in FIG. 1;
FIG. 4 is a block diagram of functions of an initialization instructing section of the system shown in FIG. 1, which are performed by applications of the computer shown in FIG. 3;
FIG. 5 is a diagram showing a screen (dialog) displayed by an initialization set screen display section of the initialization instructing section shown in FIG. 4;
FIG. 6 is a flowchart explaining a flow of a process of the computer (PC); and
FIG. 7 is a flowchart explaining a flow of a process of the recording/reproduction apparatus.

Embodiments of the present invention will now be described with reference to the accompanying drawings.

In the present embodiment, a videorecording/reproduction apparatus is taken as an example of a recording/reproduction apparatus included in an information processing system, and a computer is taken as an example of an information apparatus.

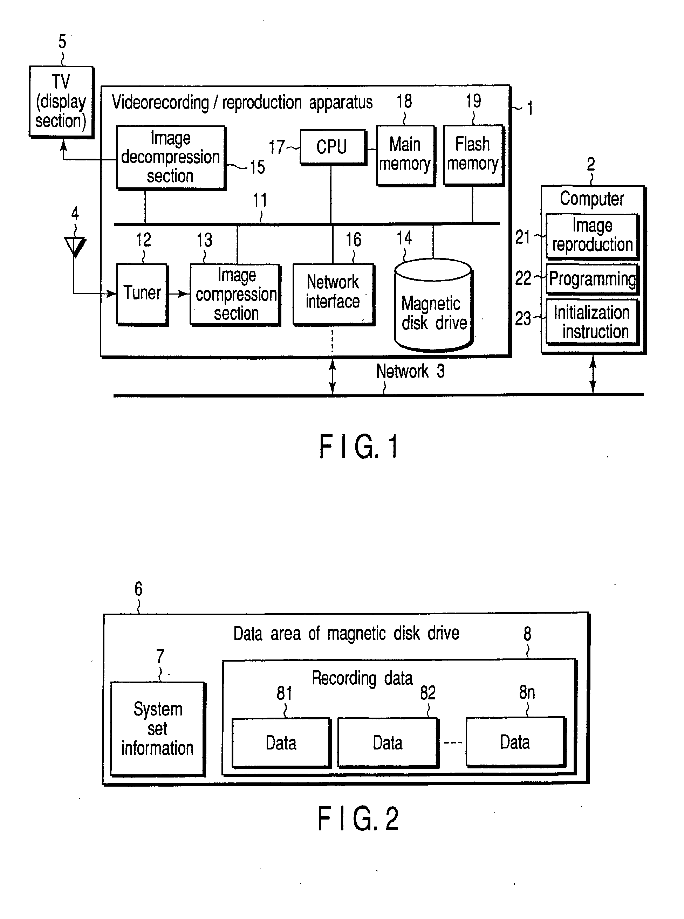

FIG. 1 is a block diagram of the entire configuration of an information processing system according to an embodiment of the present invention.

The information processing system includes a videorecording/reproduction apparatus 1, a computer 2, and a network 3 that connects the apparatus 1 and the computer 2 to each other. An antenna 4 and a TV set (including a display section) 5 are connected to the videorecording/reproduction apparatus 1.

The videorecording/reproduction apparatus 1 is capable of capturing a picture from a TV station or the like via the antenna 4 to record the picture on its internal magnetic disk as video data, supplying the picture to the TV set 5, and transferring the video data to another information apparatus through the network 3. In particular, the apparatus 1 not only transfers video data to another information apparatus (the computer 2, etc.) through the network 3 but also performs processes corresponding to various access requests (including an instruction for initialization) from the information apparatus.

The computer 2 is, for example, a portable notebook personal computer to issue various access requests (including an instruction for initialization) to the apparatus 1 through the network 3.

The network 3 corresponds to a wireless or wired LAN to transfer data between the apparatus 1 and the computer 2.

The antenna 4 receives radio waves corresponding to picture from a TV station and the like. The received radio waves are sent to the apparatus 1.

The TV set 5 displays a picture sent to the apparatus 1 via the antenna 4 (or via a video input terminal of the apparatus 1), and reproduces a picture recorded on the magnetic disk and displays it on the screen.

The videorecording/reproduction apparatus 1 includes a data transfer bus 11, a tuner 12, an image compression section 13, a magnetic disk drive 14, an image decompression section 15, a network interface 16, a CPU (central processing unit) 17, a main memory 18, and a flash memory 19.

The data transfer bus 11 is an internal bus for transferring data (including video data) that is to be transferred between devices in the apparatus 1.

The tuner 12 is used to select a channel corresponding to a picture supplied to the apparatus 1 via the antenna 4.

The image compression section 13 compresses an image corresponding to a picture of a channel selected by the tuner 12 based on the MPEG2 standards. The section 13 sends out data of the compressed image onto the data transfer bus 11.

The magnetic disk drive 14 is, for example, a hard disk drive and includes a magnetic disk as a recording medium. As illustrated in FIG. 2, a data recording area 6 is assigned to the magnetic disk. The area 6 includes an area for recording system set information (system set values) 7 such as recording time and channel numbers for programming to record a program and an area for recording data 8 (a plurality of video data items 81 to 8n).

The image decompression section 15 decompresses the compressed-image data transmitted through the data transfer bus 11 and sends out a reproduced picture to the TV set.

The network interface 16 is, for example, a wireless or wired LAN card to serve as a device for interfacing between data to be processed in the apparatus 1 and data to be processed on the network 3. The network interface 16 receives various access requests (including an instruction for initialization) from another information apparatus (the computer 2, etc.) through the network 3 to capture it into the apparatus 1 and transmit it to the information apparatus from the apparatus 1 through the network 3.

The CPU 17 controls the whole operation of the videorecording/reproduction apparatus 1. The CPU 17 processes data with another device in the apparatus 1 and executes various programs. The CPU 17 analyzes the instruction for initialization received by the network interface 16 by a given application and initializes the magnetic disk in accordance with the instruction.

The main memory 18 holds an OS (operating system) and various applications. The memory 18 is provided as a work area of the CPU 17.

The flash memory 19 stores data of the initial set value (default value) used in the CPU 17 at the time of initialization.

The computer 2 includes an image reproduction section 21, a programming section 22, and an initialization instruction section 23 as functions realized by various applications.

The image reproduction section 21 receives the compressed-image data from the apparatus 1 through the network 3. This is a function of reproducing a picture through an image decompression process.

The programming section 22 performs a function of setting and confirming the programming, and canceling the setting of programming in the apparatus 1 through the network 3.

The initialization instruction section 23 performs a function of setting an instruction for initialization in the apparatus 1 and transmitting the instruction to the apparatus 1 through the network 3. This function will be described in detail later.

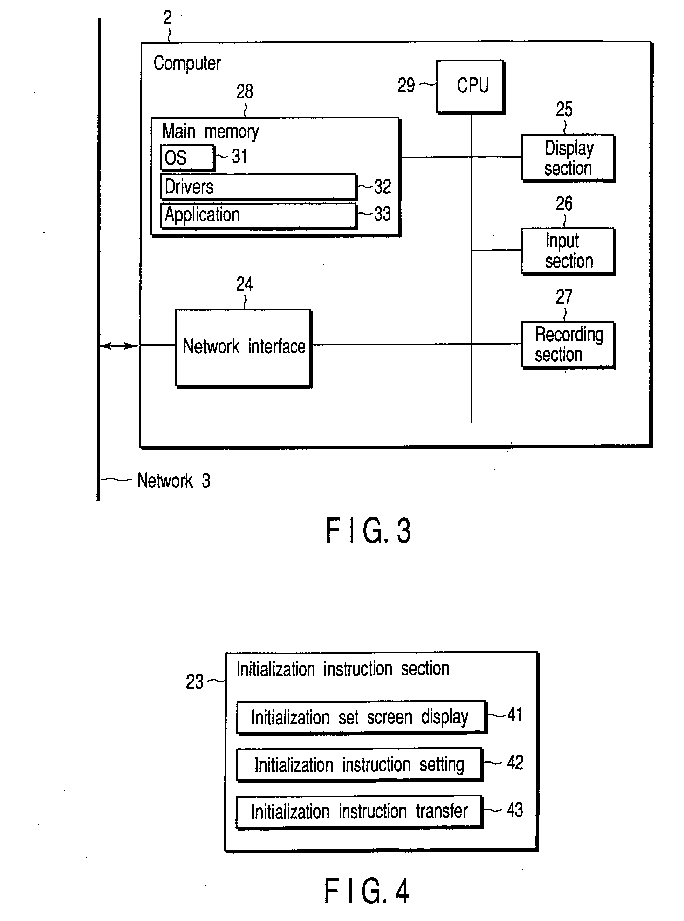

FIG. 3 is a block diagram showing an example of the internal structure of the computer 2 of the system shown in FIG. 1.

A network interface 24 is, for example, a wireless or wired LAN card to interface between data to be processed in the computer 2 and data to be processed on the network 3. The network interface 24 transmits various access requests (including an instruction for initialization) to the videorecording/reproduction apparatus 1 through the network 3, and receives information (including a notification of completion of initialization) from the apparatus 1 through the network 3 and captures it into the computer 2.

A display section 25 corresponds to, for example, an LCD (liquid crystal display) to display various kinds of information such as information for setting an instruction for initialization.

An input section 26 corresponds to, for example, a keyboard and a pointing device (mouse, etc.). The input section 26 is used when a user performs an input operation.

A recording section 27 corresponds to, for example, a hard disk drive to store various programs and data (including compressed-image data corresponding to a picture acquired by the apparatus 1).

A main memory 28 holds an OS 31, various drivers 32, various applications 33 and the like. The memory 28 is provided as a work area of the CPU 29. The functions of the foregoing image reproduction section 21, programming section 22 and initialization instruction section 23 (FIG. 1) are fulfilled by, e.g., the applications 33.

A CPU 29 controls the whole operation of the computer 2 to process data and execute programs with the other devices in the computer 2. The CPU 29 sets an instruction to initialize the magnetic disk in the apparatus 1 by the applications 33 (displays a screen for setting the instruction on the display section 25 and sets it in accordance with an input operation on the screen). The CPU 29 then transfers the set instruction to the apparatus 1 from the network interface 24 via the network 3.

FIG. 4 is a block diagram of the structure of functions of the initialization instruction section 23 that is performed by the applications 33 of the computer 2 shown in FIG. 3.

The initialization instruction section 23 includes an initialization set screen display section 41, an initialization instruction setting section 42, and an initialization instruction transfer section 43.

The initialization set screen display section 41 performs a function of causing the display section 25 to display a screen for setting an instruction to initialize the magnetic disk in the apparatus 1.

The initialization instruction setting section 42 performs a function of setting an instruction for initialization in response to an input operation of a user on the screen of the display section 25.

The initialization instruction transfer section 43 performs a function of transferring the set the instruction to the apparatus 1 from the network interface 24 through the network 3.

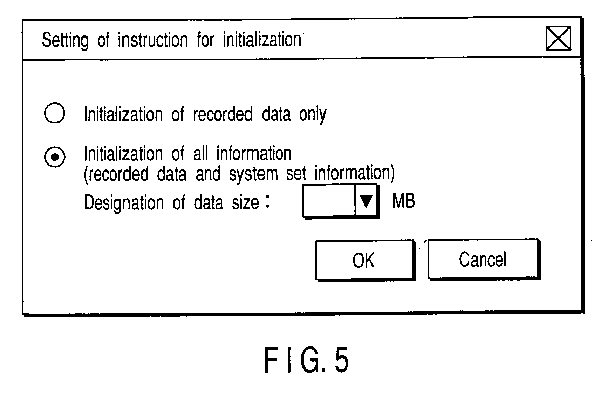

FIG. 5 is a diagram showing a screen (dialog) displayed on the initialization set screen display section 41 shown in FIG. 4.

As shown in FIG. 5, the section 41 displays a screen for setting an instruction for initialization. The screen provides a plurality of setting items including "initialization of recorded data only," "initialization of all information (recorded data and system set information)," and "designation of data size." It is possible to validate one of the items by clicking on one of the radio buttons. For the "designation of data size," a user can designate a specific numeric value for the size of a data area. In this case, the "data size" can be defined as the size of an area of recorded data (video data) or the size of an area including both an area of recorded data and a user area that a user can freely use.

If a user selects one of the items and designates a data size and then depresses an OK button, the initialization instruction setting section 42 performs a setting operation and the initialization instruction transfer section 43 performs a transfer operation.

As described above, a user can make fine setting for initialization on the above set screen and thus handle the system easily.

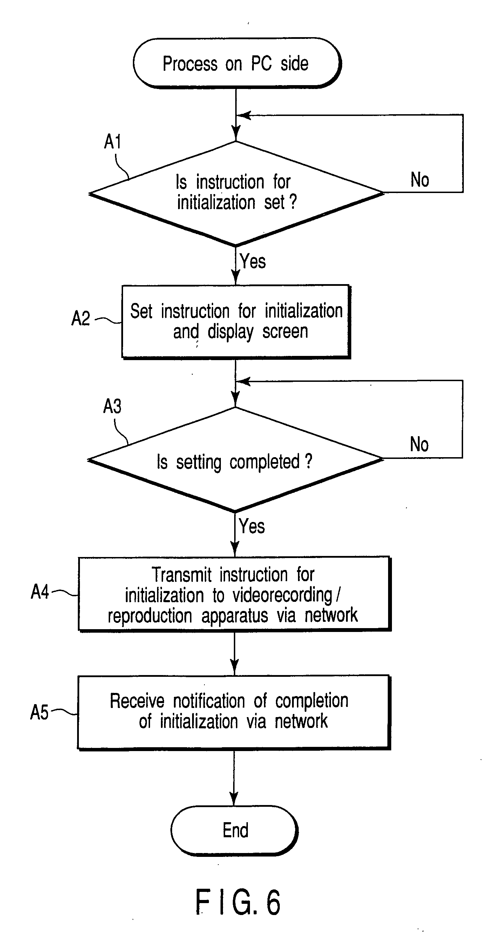

A flow of a process of the computer (PC) will now be described with reference to the flowchart shown in FIG. 6.

The CPU 29 is on standby for a user's request for setting an instruction to initialize the magnetic disk in the videorecording/reproduction apparatus 1. Therefore, the CPU 29 can respond to a request whenever the request is issued from the user.

The CPU 29 makes an access request to the apparatus 1 in response to an instruction from the user. If, then, the CPU 29 recognizes the response to be abnormal, it displays the abnormality on the display section 25. Thus, the user considers that a data structure abnormality occurs in the data recording area on the magnetic disk of the apparatus 1 and performs an input operation on the screen of the display section 25 to make a request for setting an instruction to initialize the magnetic disk. If the CPU 29 detects the request (YES in step A1), the initialization set screen display section 41 causes the display section 25 to display a screen for setting an instruction to initialize the magnetic disk in the recording/reproduction apparatus 1 (step A2).

If the user depresses the OK button on the set screen, the initialization instruction setting section 42 sets (determines) the instruction for initialization (YES in step A3).

When the setting is completed, the initialization instruction transfer section 43 transfers the set instruction to the apparatus 1 from the network interface 24 through the network 3 (step A4).

After that, the initialization is completed at the apparatus 1 and a notification of the completion of the initialization is received by the computer through the network 3 (step A5). Thus, a series of steps ends.

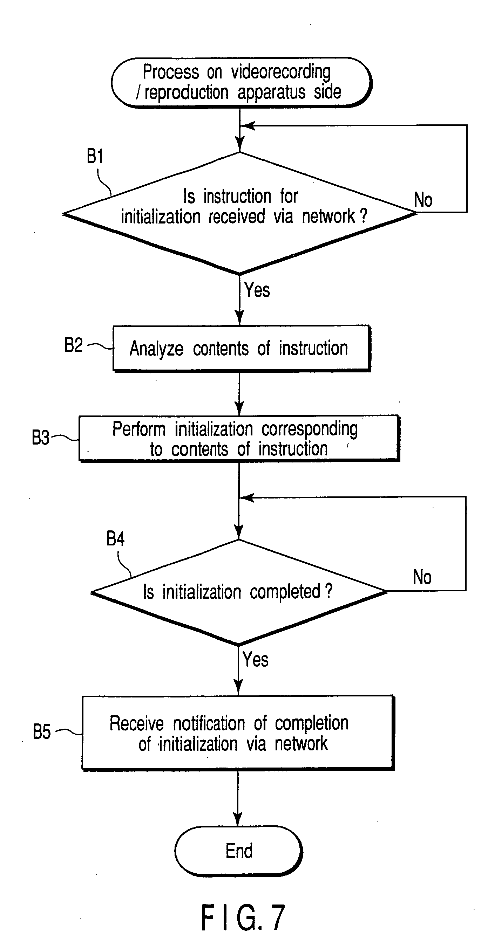

A flow of a process performed in the videorecording/reproduction apparatus 1 will now be described with reference to the flowchart shown in FIG. 7.

The network interface 16 is in a state to monitor an access request or the like, which is input through the network 3, under the control of the CPU 17.

When the network interface 16 receives an instruction for initialization from, e.g., the computer 2 through the network 3 (Yes in step B1), it delivers the subsequent control to the CPU 17.

The CPU 17 analyzes the instruction received by the network interface 16 (step B2) and initializes the magnetic disk of the magnetic disk drive 14 in accordance with the analyzed instruction (step B3). Then, an initial set value (default value) necessary for performing designated initialization is obtained from the flash memory 19 and reflected on (all or part of) a data recording area of the magnetic disk.

When the process for initialization is completed (Yes in step B4), the CPU 17 returns a notification of the completion of initialization to the computer 2, which is an originator of the instruction for initialization, through the network 3 (step B5) and ends a series of steps.

According to the present embodiment described above, the magnetic disk of the videorecording/reproduction apparatus 1 is initialized as follows. The computer 2 sets an instruction to initialize the magnetic disk and transmits it to the apparatus 1 via the network 3. The magnetic disk is initialized in accordance with the instruction. A user is therefore able to initialize the magnetic disk without being near the apparatus 1 and make fine setting for initialization as the user desires.

The present invention is not limited to the above embodiment. Various changes and modifications can be made without departing from the scope or spirit of the subject matter of the invention.

In the above embodiment, a computer is taken as an example of an information apparatus. However, the present invention can be applied to a personal digital assistant and a cellular phone.

In the above embodiment, a videorecording/reproduction apparatus for videorecording/reproducing a picture is used as an example of a recording/reproduction apparatus. However, the present invention can be applied to a videorecording/reproduction apparatus for videorecording the contents (music, etc.) other than the picture.

In the above embodiment, a magnetic disk is taken as an example of a recording medium. However, the present invention can be applied to an optical disk and a magneto-optical disk. The recording medium is not limited to a disk but can be a tape or the like.

In the above embodiment, the network is a wireless or wired LAN. However, it may include another line such as a telephone line.

As described in detail, the present invention allows a user to perform an initializing process as he or she desires from remote locations.

## Claims

1. A method of initializing a medium (14) in a first apparatus (1), **characterized by** comprising the steps of:
setting an instruction to initialize the medium (14) by a second apparatus (2) (A1 to A3);
transmitting the instruction set by the second apparatus (2) to the first apparatus (1) through a network (3) (A4); and
receiving the instruction, which are transmitted from the second apparatus (2) through the network (3), by the first apparatus (1) and initializing the medium (14) in accordance with the instruction (B1 to B4).

2. The method according to claim 1, **characterized by** further comprising displaying a screen to set the instruction by the second apparatus (2) and setting the instruction in accordance with an input operation on the screen (A2, A3).

3. The method according to claim 1, **characterized in that** the first apparatus (1) records/reproduces a picture, and the medium (14) records a picture.

4. The method according to claim 1, **characterized in that** the second apparatus (2) includes one of a computer, a personal digital assistant, and a cellular phone.

5. The method according to claim 1, **characterized in that** the network (3) includes one of a wireless LAN and a wired LAN.

6. An information processing system **characterized by** comprising:
a first apparatus (1) having a medium (14); and
a second apparatus (2) which sets an instruction to initialize the medium (14) and transmits the set instruction to the first apparatus (1) through a network (3), the first apparatus (1) receiving the instruction from the second apparatus (2) through the network (3) and initializing the medium (14) in accordance with the instruction.

7. The information processing system according to claim 6, **characterized in that** the second apparatus (2) displays a screen to set the instruction and sets the instruction in accordance with an input operation on the screen.

8. The information processing system according to claim 6, **characterized in that** the first apparatus (1) records/reproduces a picture, and the medium (14) records a picture.

9. The information processing system according to claim 6, **characterized in that** the second apparatus (2) includes one of a computer, a personal digital assistant, and a cellular phone.

10. The information processing system according to claim 6, **characterized in that** the network (3) includes one of a wireless LAN and a wired LAN.

11. A recording/reproduction apparatus
**characterized by** comprising:
a medium (14);
a communication unit (16) which receives an instruction to initialize the medium (14) through a network (3); and
a processing unit (17) which initializes the medium (14) in accordance with the instruction received by the communication unit (16).

12. The recording/reproduction apparatus according to claim 11, **characterized in that** the recording/reproduction apparatus (1) records/reproduces a picture, and the medium (14) records a picture.

13. The recording/reproduction apparatus according to claim 11, **characterized in that** the network (3) includes one of a wireless LAN and a wired LAN.
